# DEMANDE DE BREVET EUROPEEN

(11) **EP 3 922 533 A1**
(43) Date de publication de la demande: **15.12.2021**
(21) Numéro de dépôt: 21178488.9
(22) Date de dépôt: 09.06.2021
(51) Int. Cl.: B61L 23/04, B61L 15/02, B61L 5/12, B60Q 1/00, B60Q 1/52, B60Q 5/00, F21W 103/60

(54) **SYSTÈME, ET PROCÉDÉ, DE SIGNALISATION D'OBSTACLES POUR UN VÉHICULE**

(30) Priorité: 09.06.2020 FR 2006016
(71) Demandeur: ALSTOM Transport Technologies, 93400 Saint-Ouen (FR)
(72) Inventeur: LE BRETON, Frédéric, 17137 NIEUL SUR MER (FR); VINEL, Pascal, 17170 CRAM CHABAN (FR)
(74) Mandataire: Lavoix

(57) **Abrégé**

Système (10) de signalisation d'obstacles pour un véhicule (1), adapté pour :
- déterminer une zone de danger courante, à chaque instant courant considéré lors du déplacement du véhicule (1) sur sa trajectoire, en fonction de l'enveloppe délimitée par le gabarit du véhicule le long de la trajectoire à venir estimée à partir dudit instant et basée au moins sur le rayon de courbure courant de la trajectoire ;
- détecter, audit instant courant, si un obstacle est présent ou non audit instant courant, dans la zone de danger courante déterminée et pour, dans le cas où un obstacle a été détecté, déclencher au moins une alarme ;
- produire une signalisation lumineuse sur une étendue au sol fonction de ladite zone de danger courante déterminée.

## Description

La présente invention concerne le domaine de la signalisation d'obstacles pour un véhicule.

Plus particulièrement, l'invention propose un système de signalisation d'obstacles pour un véhicule se déplaçant le long d'une trajectoire, ledit système comportant un dispositif de signalisation lumineuse, un dispositif de détection d'obstacles et un bloc de détermination d'une zone de danger.

Il existe des systèmes comportant un maître-couple du véhicule superposé à une image de vidéo-surveillance. Mais aucune matérialisation au sol n'est délivrée pour les personnes extérieures.

Par ailleurs, il existe des marquages fixes au sol, ou des pavés, dans le cas des voies de passages de tramways, avec des marques blanches par exemple, ou des régions en pelouse, mais ces signalisations visuelles ne sont en aucun cas liées à la présence immédiate ou non du véhicule.

Il existe un besoin de diminuer les risques d'accidents liés à la collision entre des véhicules et les personnes, qui portent des écouteurs et n'entendent pas l'arrivée des véhicules. Il existe aussi un besoin de détecter, et de signaler, les risques réels de collision, en diminuant au maximum les faux positifs, pour éviter de saturer le système et le conducteur qui n'y accorderait alors plus l'importance nécessaire et ce même lorsqu'un danger effectif est signalé.

A cet effet, suivant un premier aspect, l'invention propose un système de signalisation d'obstacles, pour un véhicule, du type précité caractérisé en ce que le bloc de détermination de zone de danger est adapté pour déterminer, en fonction d'un ou plusieurs paramètres d'un ensemble de paramètres, une zone courante, dite zone de danger courante, à chaque instant courant considéré lors du déplacement du véhicule sur la trajectoire, ledit ensemble de paramètres comprenant l'enveloppe délimitée par le gabarit du véhicule le long de la trajectoire à venir estimée à partir dudit instant et basée au moins sur le rayon de courbure courant de la trajectoire ;
le dispositif de détection d'obstacles est adapté pour détecter, audit instant courant, si un obstacle est présent ou non audit instant courant, dans la zone de danger courante déterminée et pour, dans le cas où un obstacle a été détecté, déclencher au moins une alarme ;
le dispositif de signalisation lumineuse est adapté pour produire une signalisation lumineuse sur une étendue au sol fonction de ladite zone de danger courante déterminée.

L'invention permet ainsi la signalisation des dangers de façon fiable, active, autonome et dynamique.

Dans des modes de réalisation, un système de signalisation d'obstacles pour un véhicule suivant l'invention comporte en outre une ou plusieurs des caractéristiques suivantes :
- ladite production de signalisation lumineuse sur une étendue au sol fonction de ladite zone de danger courante déterminée est déclenchée sélectivement suite à la détection d'un obstacle dans ladite zone de danger ; et/ou
- ladite production de signalisation lumineuse sur une étendue au sol fonction de ladite zone de danger courante déterminée a lieu indépendamment de la détection d'un obstacle dans ladite zone de danger ;
- le dispositif de signalisation lumineuse comporte un bloc de projection lumineuse embarqué dans le véhicule et adapté pour produire une signalisation lumineuse sur ladite étendue au sol et/ou un bloc de signalisation lumineuse intégré dans la chaussée et adapté pour produire une signalisation lumineuse sur ladite étendue au sol ;
- l'ensemble de paramètres comporte en outre au moins un des éléments suivants : la vitesse du véhicule, sa capacité de freinage, son niveau de charge, sa position sur la ligne définissant le rayon de courbure courant ;
- ledit dispositif de signalisation lumineuse comporte un module laser 3D et est adaptée pour produire ladite signalisation lumineuse avec ledit module laser 3D, le dispositif de détection d'obstacles étant adapté pour détecter les obstacles en utilisant ledit module laser 3D.

Suivant un deuxième aspect, la présente invention propose un procédé de signalisation d'obstacles pour un véhicule se déplaçant le long d'une trajectoire à partir d'un système de signalisation d'obstacles, ledit système comportant un dispositif de signalisation lumineuse, un dispositif de détection d'obstacles et un bloc de détermination d'une zone de danger, ledit procédé étant caractérisé en ce qu'il comprend les étapes suivantes :
- détermination, en fonction d'un ou plusieurs paramètres d'un ensemble de paramètres, d'une zone courante, dite zone de danger courante, à chaque instant courant considéré lors du déplacement du véhicule sur la trajectoire, ledit ensemble de paramètres comprenant l'enveloppe délimitée par le gabarit du véhicule le long de la trajectoire à venir estimée à partir dudit instant et basée au moins sur le rayon de courbure courant de la trajectoire ;
- détection, audit instant courant, de si un obstacle est présent ou non audit instant courant, dans la zone de danger courante déterminée et, dans le cas où un obstacle a été détecté, déclenchement d'au moins une alarme ;
- production d'une signalisation lumineuse sur une étendue au sol fonction de ladite zone de danger courante déterminée.

Dans des modes de réalisation, un procédé de signalisation d'obstacles pour un véhicule suivant l'invention comporte en outre une ou plusieurs des caractéristiques suivantes :
- ladite production de signalisation lumineuse sur une étendue au sol fonction de ladite zone de danger courante déterminée est déclenchée sélectivement suite à la détection d'un obstacle dans ladite zone de danger ; et/ou
- ladite production de signalisation lumineuse sur une étendue au sol fonction de ladite zone de danger courante déterminée a lieu indépendamment de la détection d'un obstacle dans ladite zone de danger ;
- ladite signalisation lumineuse sur ladite étendue au sol est produite par un bloc de projection lumineuse embarqué dans le véhicule et/ou par un bloc de signalisation lumineuse intégré dans la chaussée ;
- l'ensemble de paramètres comporte en outre au moins l'un des éléments suivants : la vitesse du véhicule, sa capacité de freinage, son niveau de charge, sa position sur la ligne définissant le rayon de courbure courant ;
- ladite signalisation lumineuse est produite par un module laser 3D et la détection d'obstacles est effectuée en utilisant ledit module laser 3D.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue schématique latérale de l'avant d'un véhicule dans un mode de réalisation de l'invention ;
[Fig 2] la figure 2 représente une vue schématique de face du véhicule de la figure 1 dans un mode de réalisation de l'invention ;
[Fig 3] la figure 3 est une vue de dessus du véhicule et d'une zone de danger courante déterminée sur une section de la trajectoire ;
[Fig 4] la figure 4 est une vue de dessus du véhicule et de la zone de danger courante déterminée sur une autre section de la trajectoire ;
[Fig 5] la figure 5 est une représentation dans le repère du véhicule des points considérés pour paramétrer la zone de danger à l'aide du module laser 3D ;
[Fig 6] la figure 6 est un organigramme d'étapes mises en œuvre dans un mode de réalisation de l'invention.

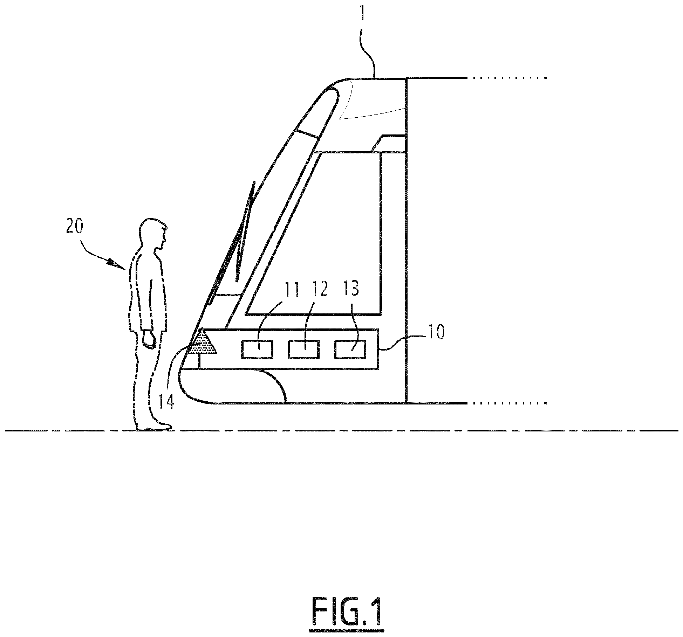

La figure 1 représente une vue de côté de l'avant d'un véhicule 1 intégrant un système de signalisation d'obstacles 10 selon un mode de réalisation de l'invention.

Dans l'exemple considéré, le véhicule 1 est un tramway circulant, le long d'une trajectoire, sur des rails (non représentés) intégrés dans la chaussée.

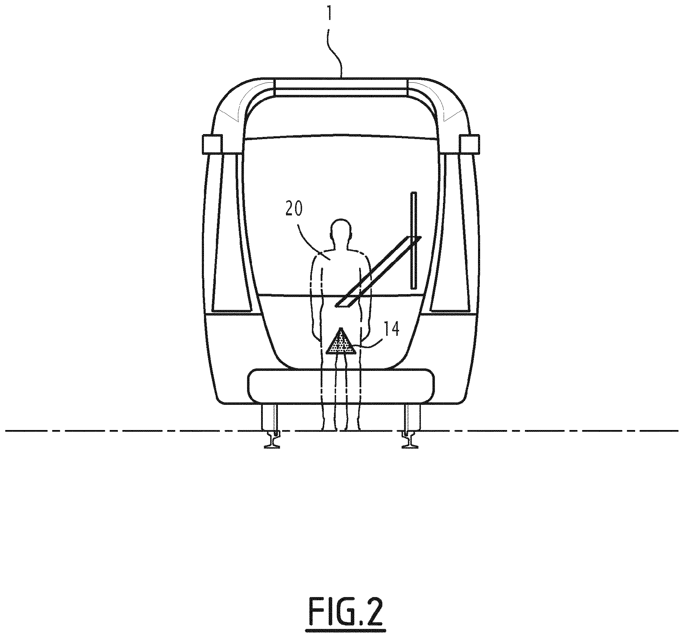

La figure 2 représente une vue de face du véhicule 1.

Le système de signalisation 10 comporte un dispositif de détermination 11 d'une zone Z, nommée zone de danger, un module de détection d'obstacle 12 et un module de signalisation lumineuse 13.

Le dispositif de détermination 11 d'une zone Z, nommée zone de danger, est adapté pour déterminer quelle est la zone courante de danger Z pour le véhicule 1, à l'instant courant t de la forme t = n.T, avec n entier positif et T la période par exemple ayant une valeur comprise dans la plage 100 ms - 1s, T étant proportionnel à la vitesse de la rame.

Le dispositif de détermination 11 de la zone de danger est adapté pour fournir l'indication de ladite zone de danger courante Z telle que déterminée au module de détection d'un obstacle 12 et au module de signalisation lumineuse 13.

Cette zone de danger Z est par exemple une zone 3D et correspond, dans un mode de réalisation, à l'enveloppe décrite par le déplacement du gabarit du véhicule le long de la trajectoire à venir estimée à partir dudit instant courant ; cette enveloppe est ainsi fonction d'au moins le rayon de courbure courant de la trajectoire et le cas échéant des rayons de courbure qui suivent.

Le module de détection d'un obstacle 12 est adapté pour détecter un obstacle (et éventuellement calculer la distance entre l'avant du véhicule 1 et cet obstacle détecté) qui serait présent à l'instant courant dans la zone Z courante telle que déterminée pour l'instant courant par le dispositif de détermination 11 d'une zone Z et pour au cas où un obstacle a été détecté, déclencher un processus d'alerte comprenant par exemple : envoi d'une indication d'obstacle détecté au module de signalisation lumineuse 13, et/ou envoi d'un signal d'alerte au conducteur du véhicule 1 avec éventuellement la distance à l'obstacle, ...

Dans un mode de réalisation, comportant ainsi deux niveaux de réaction, le module de détection 12 compare en outre la distance à l'obstacle calculée avec un seuil prédéterminé et si la distance à l'obstacle calculée est inférieure au seuil prédéterminé, le module de détection 12 déclenche un freinage d'urgence.

Le module de signalisation lumineuse 13 est adapté pour déclencher, dès réception d'une indication d'obstacle détecté au module de détection 12, une signalisation lumineuse délimitant une étendue au sol fonction de ladite zone de danger courante Z déterminée. Dans un mode de réalisation, ladite étendue éclairée est la surface délimitée par la projection orthogonale sur le sol de la zone courante de danger Z déterminée.

Dans le mode de réalisation considéré, le module de détection d'obstacle 12 utilise, pour la détection, un module laser à balayage en 3 dimensions (par exemple le détecteur UXM-30LN-PW^{®} du fournisseur hokuyo : http://www.hokuyo-aut.jp/02sensor/07scanner/uxm_30ln_pw.html), et le module de signalisation lumineuse 13 utilise ce même module laser pour illuminer l'étendue au sol fonction de la zone Z.

Par exemple, ce module laser à balayage 3D est paramétrable automatiquement en fonction de la position du véhicule sur la trajectoire et des données relatives au véhicule.

Dans un mode de réalisation, ce module laser utilise un capteur 14 et comporte une zone de détection paramétrable, qui selon l'invention, est paramétrée à l'instant courant pour être égale à la zone Z courante déterminée.

Le dispositif de détermination de la zone de danger courante Z 11 est adapté pour déterminer en 3 dimensions (3D) la forme de la zone de danger Z.

La zone de danger Z est la zone (moyennant par exemple une marge) se déroulant devant le véhicule telle que, si elle contient un obstacle, celui-ci sera d'office percuté par le véhicule lors de la progression de ce véhicule.

Dans un mode de réalisation, la zone Z est déterminée en fonction de, ou égale à dans des modes de réalisations, l'enveloppe extérieure telle que décrite en déplaçant le gabarit du véhicule le long de la trajectoire à partir de la position occupée à l'instant courant et ce sur une distance maximum donnée (ou pendant un temps maximum donné), afin de restreindre au maximum les fausses détections.

Le temps ou la distance maximum considéré(e) est calculé par exemple en fonction de la capacité de freinage du véhicule, de sa vitesse courante, de son accélération courante, de son poids, du nombre de passagers etc.

La notion de gabarit est connue : le gabarit est défini par l'ensemble des dimensions du contour d'un véhicule ferroviaire. Outre la géométrie du véhicule, il prend en compte le jeu entre les roues et le rail, les déplacements maximum possibles dans toutes les directions dus aux vibrations, aux suspensions

Cette détermination de la zone courante de détection et signalisation est ainsi fonction au moins de l'un ou de plusieurs de ces paramètres :
- géométrie du véhicule 1 (toutes cotes diagrammes)
- gabarit du véhicule 1 ;
- portion de trajectoire à venir du véhicule, y compris rayon de courbure (le système 10 comporte par exemple une base de données donnant, dans le cas d'un véhicule circulant sur voies tels que tram, train..., l'ensemble des rayons de courbure en fonction de la localisation sur la trajectoire) ;
- position du véhicule sur la ligne définissant le rayon de courbure courant (du rayon le plus serré à l'alignement droit) ;
- vitesse du véhicule ;
- état courant du véhicule, dont la capacité de freinage (dimensionnement du système de freinage, état de charge du véhicule, nombre d'éléments actifs de freinage) ;
- marge de sécurité ;
- de la taille minimale d'un objet à détecter.

Le capteur 14 est disposé par exemple à l'avant du véhicule sur une partie de carénage du véhicule 1, comme représenté aux figures 1 et 2, par exemple centré sur l'axe longitudinale du véhicule.

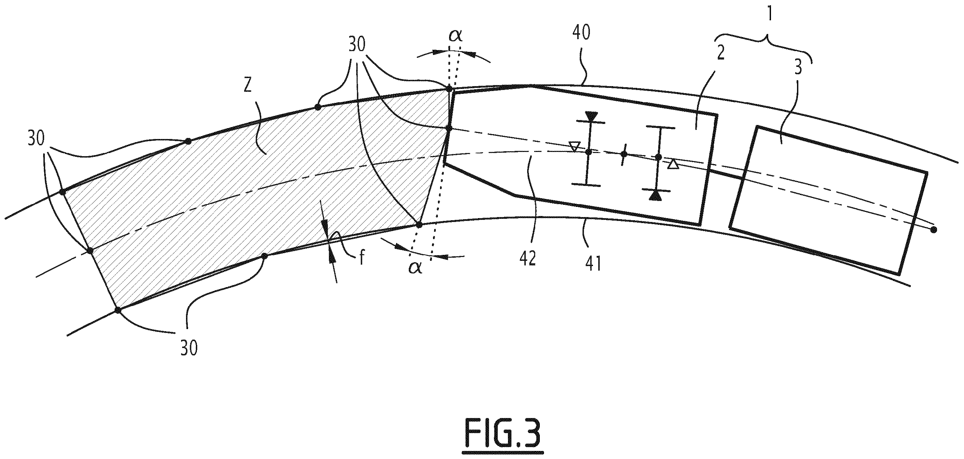

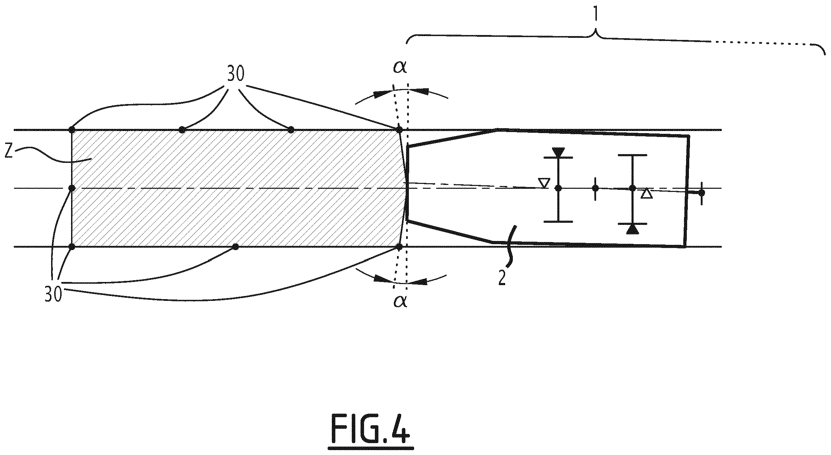

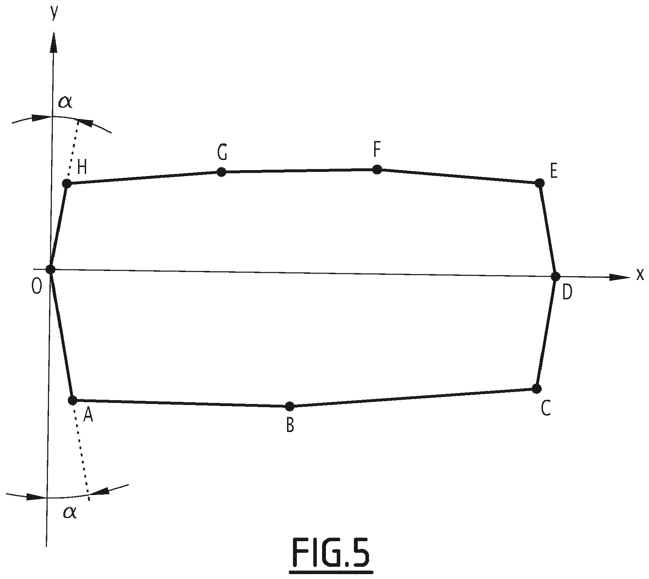

Dans un mode de réalisation, la paramétrisation dans le module laser de la zone Z tel que déterminée par le module de détermination 11 est réalisée à l'aide d'un nombre de points configurables dans le capteur laser 3D, par exemple 9 points A, B, C, D, E, F, G, H, représentés en figure 5 et référencés globalement comme les points 30 sur les figures 3 et 4. L'angle α est choisi de manière qu'il permette de couvrir l'objet minimal à détecter à l'avant du véhicule ; les coordonnées de points A et H sont choisis également en fonction de la taille dudit objet minimal selon les normes de sécurité en vigueur (par exemple pour le marché français, il faut pouvoir détecter un cylindre de diamètre 100 mm ou 200 mm à l'avant contre le véhicule : l'angle α choisi doit permettre au faisceau laser de traverser un tel cylindre placé tout contre le véhicule).

Dans le module laser, la zone de détection Z est paramétrée par les paramètres suivants : position des points par rapport au repère capteur centré en O, l'angle α (entre le segment OH et l'axe transversal du véhicule correspondant à l'axe y sur la figure 5 et également entre le segment OA et -y) étant identique pour les segments OH et OA, les coordonnées des points étant indépendantes les unes des autres.

Ainsi le dispositif de détermination de la zone de danger 11 est adapté pour calculer à chaque instant courant les coordonnées des points A à H et pour les fournir au module laser embarqué.

Ainsi, par exemple en référence à la figure 3 est représenté en vue de dessus le véhicule 1 comprenant la voiture de tête 2 et une voiture 3 tractée par la voiture de tête. La courbe 42 correspond à la trajectoire et à un rayon de courbure de trajectoire non nul (véhicule largeur 2400 mm en courbe de 25 m). La courbe 40 est le rayon d'emprise extérieur du gabarit le long de la portion de trajectoire considérée ; la courbe 41 est le rayon d'emprise intérieur du gabarit le long de la portion de trajectoire considérée. La partie hachurée de l'enveloppe du gabarit est la zone courante de danger Z alors déterminée. Les points 30 correspondent aux points A à H de coordonnées alors calculées pour le module laser.

Similairement la figure 4 représente en vue de dessus le véhicule 1 (la voiture de tête 2) cette fois sur une trajectoire rectiligne (véhicule largeur 2400 mm en alignement droit), les points A à H 30 et la zone de danger Z courante déterminée.

La distance OD, correspondant aussi à la distance maximum (ou au temps maximum) considéré plus haut, est fonction de la capacité de freinage calculée par le dispositif de détermination de la zone de danger 11 à l'instant courant et donc de la charge du véhicule, de l'état des solements frein, de la vitesse.

Dans des modes de réalisation, dans le paramétrage du module laser :
- la flèche (l'écart notamment transversal) f entre gabarit (rayon de courbe) et la zone de détection réellement obtenue sera inférieure à la moitié de la taille de l'objet minimal à détecter.

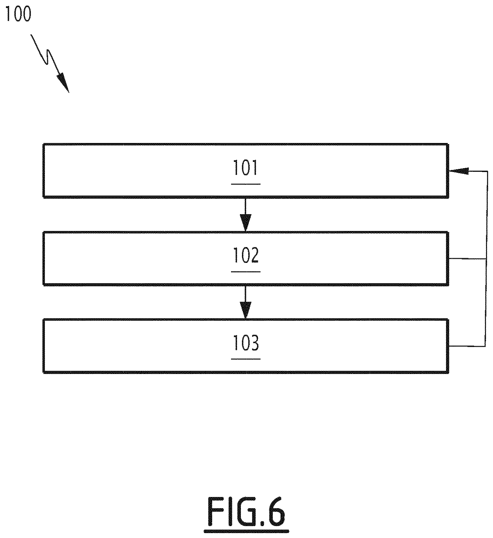

Dans un mode de réalisation, le système de signalisation 10 selon l'invention comprend un processeur et une mémoire (non représentés). La mémoire comprend des instructions logicielles, qui lorsqu'elles sont exécutées sur le processeur, mettent en œuvre automatiquement les étapes (ou certaines au moins de ces étapes) incombant à un ou plusieurs des dispositifs parmi les dispositifs de détermination de zone de danger, de détection et de signalisation lumineuse et décrites en référence à la figure 6.

La figure 6 illustre l'ensemble des étapes mises en œuvre dans un procédé de signalisation selon l'invention.

Dans une étape 101, à l'instant courant t de la forme t = n.T, la zone de danger Z courante pour le véhicule 1 est déterminée, en fonction des paramètres indiqués plus haut, par le dispositif de détermination 11, qui fournit les données de définition de cette zone Z ainsi déterminée au module de détection d'un obstacle 12 et au module de signalisation lumineuse 13.

Dans une étape 102, le module de détection d'un obstacle 12 détecte si un obstacle (et éventuellement la distance entre l'avant du véhicule 1 et cet obstacle) est présent à l'instant courant dans la zone Z courante telle que déterminée.

Si aucun obstacle n'a été détecté, l'étape 101 sera réitérée à l'instant suivant, i.e. (n+1)T.

Si un obstacle est détecté, dans une étape 103, un processus d'alerte est déclenché, comprenant par exemple : envoi d'une indication d'obstacle détecté au module de signalisation lumineuse 13, et/ou envoi d'un signal d'alerte au conducteur du véhicule 1 avec éventuellement la distance à l'obstacle.

Dans un mode de réalisation, le module de détection 12 compare la distance à l'obstacle calculée avec un seuil prédéterminé et si la distance à l'obstacle calculée est inférieure au seuil prédéterminé, le module de détection 12 déclenche un freinage d'urgence du véhicule 1.

Le module de signalisation lumineuse 13, sur réception de l'indication d'obstacle détecté dans la zone de danger courante Z, déclenche l'éclairage d'une étendue au sol fonction de ladite zone de danger courante Z déterminée, dans le mode de réalisation considéré, cette étendu correspond à la surface délimitée par la projection orthogonale sur le sol de la zone courante de danger Z déterminée. Puis l'étape 101 est réitérée à l'instant (n+1)T.

L'invention permet ainsi de matérialiser au sol la zone réellement dangereuse à l'avant du véhicule, dès présence d'obstacle. La signalisation visuelle ainsi proposée est active et dynamique, efficace, sans générer de nuisance sonore pour les riverains. Les conducteurs, qui ne sont alertés que dans les cas dangereux et ne sont pas noyés sous un flot de faux positifs, sont plus vigilants en cas d'alerte.

L'information de danger est ainsi fournie aux personnes ne prêtant pas attention aux signaux sonore d'avertissement de la présence véhicule (bruit roulement, cloche gong et klaxon ou malentendante) et lumineux pour des personnes de côté par rapport à la voie ou de dos par rapport au véhicule ne voyant pas l'appel de phare par exemple, qui est un signal non projeté sur une surface).

Ainsi suivant l'invention, la zone de danger Z objet de la détection et de l'illumination change au fil de la trajectoire et s'adapte automatiquement, notamment en fonction du rayon de courbure suivi par le tramway 1, en fonction de l'état courant du véhicule (par exemple si un frein est défaillant, la capacité du véhicule à freiner est modifiée et cette modification est prise automatiquement en compte dans la taille de la zone de danger, qui augmente alors).

On notera que dans des modes de réalisation, le dispositif de signalisation lumineuse 13 est adapté pour illuminer la zone Z seulement en cas de détection d'obstacle comme décrit ci-dessus, ou dans un autre mode de réalisation pour illuminer en permanence la zone Z courante, ou alors pour ne l'illuminer que la nuit.

Dans un mode de réalisation, les moyens d'illumination (ou une partie d'entre eux) ne sont pas embarqués et sont disposés dans la chaussée ou face à la chaussée.

L'invention permet de limiter le nombre de faux positifs, la zone sondée correspondant vraiment à la zone dangereuse. Ainsi une personne en face du tramway qui prend une courbe et ainsi qui n'est en réalité pas en risque de collision ne sera pas identifiée comme obstacle dans la zone de danger.

Dans un mode de réalisation, lors de la détection d'un obstacle dans la zone Z, le système déclenche la mise en œuvre d'éléments de préparation au choc, évitant que des personnes (par exemple l'individu 20 représenté en figures 1 et 2) ne passent sous le véhicule.

Dans un autre mode de réalisation, le module de détermination de la zone de danger 11 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Dans des modes de réalisation, le dispositif de détection 12 utilise d'autres technologies de détection que le laser 3D, par exemple un Lidar sonore et/ou le dispositif de signalisation lumineuse 13 utilise d'autres technologies d'éclairage que le laser 3D, par exemple des LEDs.

On notera que dans l'exemple décrit ci-dessus, le véhicule est un tramway, néanmoins l'invention est applicable à tout type de véhicule : métro, train, voiture, bus

En outre, lorsque les moyens d'illumination ne sont pas embarqués et sont disposés dans la chaussée ou face à la chaussée, le dispositif de signalisation lumineuse 13 comprend par exemple une unité de contrôle qui est configurée pour communiquer par liaison sans fil avec les moyens d'illumination disposés dans la chaussée ou face à la chaussée. L'unité de contrôle est par exemple configurée pour commander les moyens d'illumination disposés dans la chaussée ou face à la chaussée, pour qu'ils produisent une signalisation lumineuse sur l'étendue au sol fonction de la zone de danger courante déterminée.

## Revendications

1. Système (10) de signalisation d'obstacles pour un véhicule (1) se déplaçant le long d'une trajectoire (42), ledit système comportant un dispositif de signalisation lumineuse (13), un dispositif de détection d'obstacles (12) et un bloc de détermination (11) d'une zone de danger (Z), ledit système étant **caractérisé en ce que** :
le bloc de détermination de zone de danger (11) est adapté pour déterminer, en fonction d'un ou plusieurs paramètres d'un ensemble de paramètres, une zone courante (Z), dite zone de danger courante, à chaque instant courant considéré lors du déplacement du véhicule (1) sur la trajectoire, ledit ensemble de paramètres comprenant l'enveloppe délimitée par le gabarit du véhicule le long de la trajectoire à venir estimée à partir dudit instant et basée au moins sur le rayon de courbure courant de la trajectoire ;
le dispositif de détection d'obstacles (12) est adapté pour détecter, audit instant courant, si un obstacle est présent ou non audit instant courant, dans la zone de danger courante (Z) déterminée et pour, dans le cas où un obstacle a été détecté, déclencher au moins une alarme ;
le dispositif de signalisation lumineuse (13) est adapté pour produire une signalisation lumineuse sur une étendue au sol fonction de ladite zone de danger courante déterminée.

2. Système (10) de signalisation d'obstacles pour un véhicule (1) selon la revendication 1, dans lequel
ladite production de signalisation lumineuse sur une étendue au sol fonction de ladite zone de danger courante déterminée est déclenchée sélectivement suite à la détection d'un obstacle dans ladite zone de danger ; ou
ladite production de signalisation lumineuse sur une étendue au sol fonction de ladite zone de danger courante déterminée a lieu indépendamment de la détection d'un obstacle dans ladite zone de danger.

3. Système (10) de signalisation d'obstacles pour un véhicule (1) selon la revendication 1 ou 2, dans lequel le dispositif de signalisation lumineuse (13) comporte un bloc de projection lumineuse embarqué dans le véhicule et adapté pour produire une signalisation lumineuse sur ladite étendue au sol et/ou un bloc de signalisation lumineuse intégré dans la chaussée et adapté pour produire une signalisation lumineuse sur ladite étendue au sol.

4. Système (10) de signalisation d'obstacles pour un véhicule (1) selon l'une des revendications précédentes, dans lequel l'ensemble de paramètres comporte en outre au moins un des éléments suivants : la vitesse du véhicule, sa capacité de freinage, son niveau de charge, sa position sur la ligne définissant le rayon de courbure courant.

5. Système (10) de signalisation d'obstacles pour un véhicule (1) selon l'une des revendications précédentes, dans lequel ledit dispositif de signalisation lumineuse (13) comporte un module laser 3D et est adaptée pour produire ladite signalisation lumineuse avec ledit module laser 3D, le dispositif de détection d'obstacles étant adapté pour détecter les obstacles en utilisant ledit module laser 3D.

6. Procédé de signalisation d'obstacles pour un véhicule (1) se déplaçant le long d'une trajectoire (42) à partir d'un système de signalisation d'obstacles, ledit système comportant un dispositif de signalisation lumineuse (13), un dispositif de détection d'obstacles (12) et un bloc de détermination (11) d'une zone de danger (Z), ledit procédé étant **caractérisé en ce qu'**il comprend les étapes suivantes :
- détermination, en fonction d'un ou plusieurs paramètres d'un ensemble de paramètres, d'une zone courante (Z), dite zone de danger courante, à chaque instant courant considéré lors du déplacement du véhicule (1) sur la trajectoire, ledit ensemble de paramètres comprenant l'enveloppe délimitée par le gabarit du véhicule le long de la trajectoire à venir estimée à partir dudit instant et basée au moins sur le rayon de courbure courant de la trajectoire ;
- détection, audit instant courant, de si un obstacle est présent ou non audit instant courant dans la zone de danger courante (Z) déterminée et, dans le cas où un obstacle a été détecté, déclenchement d'au moins une alarme ;
- production d'une signalisation lumineuse sur une étendue au sol fonction de ladite zone de danger courante déterminée.

7. Procédé de signalisation d'obstacles pour un véhicule (1) selon la revendication 6, selon lequel :
ladite production de signalisation lumineuse sur une étendue au sol fonction de ladite zone de danger courante déterminée est déclenchée sélectivement suite à la détection d'un obstacle dans ladite zone de danger ; ou
ladite production de signalisation lumineuse sur une étendue au sol fonction de ladite zone de danger courante déterminée a lieu indépendamment de la détection d'un obstacle dans ladite zone de danger.

8. Procédé de signalisation d'obstacles pour un véhicule (1) selon la revendication 6 ou 7, selon lequel ladite signalisation lumineuse sur ladite étendue au sol est produite par un bloc de projection lumineuse embarqué dans le véhicule et/ou par un bloc de signalisation lumineuse intégré dans la chaussée.

9. Procédé (10) de signalisation d'obstacles pour un véhicule (1) selon l'une des revendications 6 à 8, selon lequel l'ensemble de paramètres comporte en outre au moins l'un des éléments suivants : la vitesse du véhicule, sa capacité de freinage, son niveau de charge, sa position sur la ligne définissant le rayon de courbure courant.

10. Procédé (10) de signalisation d'obstacles pour un véhicule (1) selon l'une des revendications 6 à 9, selon lequel ladite signalisation lumineuse est produite par un module laser 3D et la détection d'obstacles est effectuée en utilisant ledit module laser 3D.
